Europäisches Patentamt

European Patent Office

Office européen des brevets

(19)

(11) Veröffentlichungsnummer : **0 057 395**
**B1**

(12) # EUROPÄISCHE PATENTSCHRIFT

(45) Veröffentlichungstag der Patentschrift :
09.10.85

(51) Int. Cl.⁴ : **H 01 S   3/03**

(21) Anmeldenummer : **82100467.8**

(22) Anmeldetag : **23.01.82**

(54) **Gaslaser.**

(30) Priorität : 02.02.81 DE 3103385

(43) Veröffentlichungstag der Anmeldung :
**11.08.82 Patentblatt 82/32**

(45) Bekanntmachung des Hinweises auf die Patenterteilung : **09.10.85 Patentblatt 85/41**

(84) Benannte Vertragsstaaten :
**FR GB IT**

(56) Entgegenhaltungen :
**EP-A- 0 009 965
DE-A- 2 326 561
FR-A- 2 227 659
FR-A- 2 227 660
US-A- 3 955 152
NEUES AUS DER TECHNIK, Nr. 3, 1. Juni 1977, Seite 3, Wurzburg, DE.**

(73) Patentinhaber : **TELDIX GmbH
Grenzhöfer Weg 36 Postfach 105608
D-6900 Heidelberg 1 (DE)**

(72) Erfinder : **Baron, Klaus Uwe, Dr. rer. nat.
Turnerstrasse 11
D-6900 Heidelberg 1 (DE)**
Erfinder : **Wiegemann, Hans Bertram, Dr. rer.nat.
Dr. Hermann-Braun-Strasse 16
D-6905 Schriesheim (DE)**

(74) Vertreter : **Kammer, Arno, Dipl.-Ing.
TELDIX GmbH Postfach 10 56 08 Grenzhöfer Weg 36
D-6900 Heidelberg 1 (DE)**

## Beschreibung

Die Erfindung betrifft einen Gaslaser, bestehend

a) aus einem Kapillarrohr aus nichtleitendem Material wie Glas, Keramik oder dergleichen,

b) aus einem Vorratstank, der mit der Kapillare in Strömungsverbindung steht und wie diese mit einem aktiven Lasergas gefüllt ist, der das Kapillarrohr koaxial umgibt, dessen Hülle an dem Kapillarrohr den Vorratstank abdichtend in zwei axial versetzten Ebenen befestigt ist und in dem die Kathode untergebracht ist,

c) aus zwei an der Kapillare angebrachten Anoden und

d) aus an den Kapillarenden angeordneten Spiegeln

e) wobei das Kapillarrohr symmetrisch hinsichtlich einer in axialer Richtung in der Mitte der Kapillare und senkrecht dazu gedachten Ebene ausgebildet ist,

f) und die Strömungsverbindung zwischen Kapillare und Vorratstank in dieser Ebene liegt.

Ein Gaslaser mit den genannten Merkmale ist aus der FR-A 2 227 660 bekannt. Das dort dargestellte und beschriebene Laserrohr enthält ein Kapillarrohr aus Glas, das zwei an seinen beiden Enden angeordnete, mit der Kapillare in Verbindung stehende Anoden trägt. Das zweistückig ausgebildete Kapillarrohr ist in seiner Mitte unterbrochen, wodurch eine Strömungsverbindung zu dem das Kapillarrohr koaxial umgebenden Vorratstank entsteht, dessen Hülle ebenfalls aus Aluminium besteht und der die Kathode bildet. Die Hülle des Vorratstanks ist an seinen beiden Enden mit dem Kapillarrohr fest verbunden.

Das in der DE-A-2 343 140, Figur 1, dargestellte und beschriebene Laserrohr enthält ein einstückig ausgebildetes Kapillarrohr aus Glas, das eine an seinem einen Ende angeordnete, mit der Kapillare in Verbindung stehende Anode trägt. Am anderen Ende des Kapillarrohrs ist eine Verbindung zu dem das Kapillarrohr koaxial umgebenden Vorratstank vorgesehen, dessen Hülle ebenfalls aus Glas besteht und der die Kathode des Lasers enthält. Die Glashülle des Vorratstanks ist an seinen beiden Enden mit dem Kapillarrohr aus Glas verbunden.

Bei derartigen Laserröhren, bei denen das Kapillarrohr an beiden Enden mit der Hülle des Vorratstanks fest verbunden ist, besteht wegen der unterschiedlichen Erwärmung und damit unterschiedlichen Ausdehnung der Teile bei Laserbetrieb die Gefahr, daß die Hülle des Vorratstanks reißt. Außerdem kommt bei dieser Lösung wegen der beiden Verschmelzungen der Glashülle mit dem Glaskapillarrohr, die notwendig sind, wenn vom Laser Langzeitdichtigkeit auch bei Umweltbelastungen, wie chemische Einflüsse und Temperatur und gegebenenfalls Schock und/oder Vibrationen verlangt wird, eine Beeinflussung, z. B. Aufweitung des Kapillarinnendurchmessers an zwei Stellen zustande, was die Verstärkung des Lasers negativ beeinflußt. Aus diesen Gründen sind die Kapillarrohre von Lasern im allgemeinen nur einseitig an der Hülle des Vorratstanks befestigt (z. B. DE-OS 26 03 267 und 30 03 669), was jedoch wieder zu Ausrichtschwierigkeiten grundsätzlich, insbesondere jedoch bei den genannten Umwelteinflüssen führt.

Der Erfindung liegt die Aufgabe zugrunde, ein Laserrohr zu schaffen, das bei hoher Leistung eine möglichst kurze Baulänge hat, andererseits seine Eigenschaften bei Umwelteinflüssen möglichst wenig ändert bzw. durch Temperatureinflüssen nicht zerstört werden kann.

Diese Aufgabe wird durch die im Anspruch 1 angegebenen Merkmale gelöst.

Die hohe Leistung bei geringer Baulänge ergibt sich durch die Verwendung von zwei Anoden, die unmittelbar an den beiden Enden angeordnet werden und vorzugsweise in die Stirnflächen des Kapillarrohres integriert sind. Die beidseitige Fassung des Kapillarrohres in dem Vorratstank gewährleistet, daß Verkippungen und Verlagerungen durch Schock, Vibrationen und auch Temperatur nicht vorkommen können.

Einer Zerstörung bei betriebsbedingten Temperatureinflüssen, gegebenenfalls überlagert durch Umwelt-, Schock- und Vibrationsbelastungen, ist durch die Verwendung von verformbaren Teilen in den Verbindungen der beiden Teile selbst oder aber in der Hülle vorgebeugt. Die koaxiale Anordnung des Vorratstanks erlaubt außerdem ein geringes Bauvolumen.

Wenn — wie bereits erwähnt — die Anoden zur vollen Ausnutzung des Kapillarrohrs in die Stirnflächen des Kapillarrohres integriert sind, ist es vorteilhaft, hierauf (außen) die Laserspiegel und/oder die unter dem Brewster-Winkel aufzubringenden, durchsichtigen Platten zu befestigen.

Vorzugsweise besteht der Vorratstank aus Metall oder aus einem ähnlich gut mechanisch bearbeitbaren Material. Diese Wahl hat den Vorteil, daß man den Vorratstank, wenn er mit dem Kapillarrohr verbunden ist, im Sinne einer Übereinstimmung der Koaxialität von wenigstens Teilen der Hüllenoberfläche mit der Kapillarachse, nachbearbeiten kann. Damit braucht man für den Betrieb den Laser nur an diesen zu dem Kapillarrohr koaxialen Flächen fassen und eine aufwendige Justierung des Lasers zur exakten Ausrichtung der Kapillarachse auf die Achse des übergeordneten optischen Systems entfällt.

Die Verbindung zwischen der Hülle des Vorratstanks und dem Kapillarrohr wird vorzugsweise so vorgenommen, daß man die beiden Bereiche, an denen die Hülle zu befestigen ist, metallisiert. Mittels dieser Metallisierung kann man dann ein Metallteil — sei es die metallische Hülle des Tanks selbst oder ein metallisches Zwischenstück, z. B. ein metallischer, verformbarer Ring — anlöten, ohne daß die Kapillare hierdurch beeinflußt werden würde.

Bei Verwendung eines metallischen Rings kann mit diesem dann die metallische Hülle des Tanks verschweißt werden. Ist die Hülle ein Glaskörper, so läßt sich der Ringrand in den Glaskörper einschmelzen.

Günstigerweise besteht der Vorratstank aus einem Metallzylinder und zwei damit verbundenen Stirnringen, von denen einer mit der als Zylinder ausgebildeten Kathode verbunden ist. Die Innenkanten dieser Stirnringe werden dann mit den verformbaren Teilen verschweißt, die ihrerseits an dem Kapillarrohr angelötet sind.

Die die geringe axiale Beweglichkeit bewirkenden Teile können z. B. auch an den Verbindungsstellen zwischen den Stirnringen und dem Zylinder liegen oder auch in der Zylinderoberfläche selbst, z. B. in Form einer u-förmigen Aus- oder Einwölbung.

Der erfindungsgemäße Gaslaser in der Form mit unter dem Brewster-Winkel aufgesetzten durchsichtigen Abschlußplatten ist vorzugsweise als optische Quelle für die beiden gegensinnig unlaufenden Lichtstrahlen eines aktiven Laserkreisels geeignet, wobei die notwendige Rückkopplung beider Strahlen in bekannter Weise über die Umlenkspiegel des Laserskreisels erfolgt.

Anhand der Zeichnung werden Ausführungsbeispiele der Erfindung näher erläutert.

Es zeigen

Figur 1 ein erstes bevorzugtes Ausführungsbeispiel der Erfindung,

Figur 2 eine zweite Ausführungsform der Erfindung in vereinfachter Darstellung,

Figur 3 eine Prinzipdarstellung eines Laserkreisels.

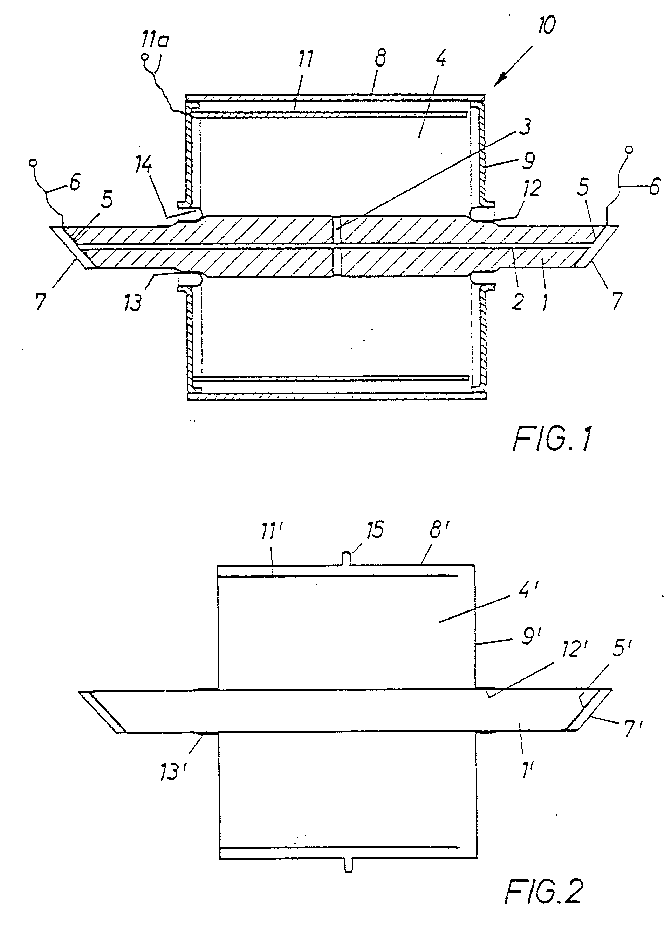

In Figur 1 ist mit 1 ein Kapillarrohr bezeichnet, dessen Kapillare das Bezugszeichen 2 trägt. Das Kapillarrohr besteht aus Keramik. Mittig ist das Kapillarrohr mit einer Bohrung 3 durchsetzt, die die Kapillare mit einem koaxial angeordneten Vorratstank 4 verbindet. Kapillare 2 und Vorratstank 4 sind mit einem geeigneten Gas, insbesondere Edelgas oder Gemischen desselben gefüllt. An den Enden der Kapillare 2 sind an die Kapillare angrenzende Metallplatten 5 schräg auf dem Kapillarrohr 1 befestigt, die jedoch in der Kapillarachse durchbohrt sind. Sie sind die Anoden des Lasers und werden über Anschlüsse 6 mit der Stromversorgung verbunden. Auf den Metallplatten 5 sind durchsichtige Platten 7 (Glas) unter dem sogenannten Brewster-Winkel befestigt. Sie schließen die Kapillare 2 vakuumdicht ab und lassen wegen der Anordnung unter dem genannten Winkel die Laserstrahlen ohne Reflexionen durchtreten. In diesem Falle sind nicht gezeigte externe Spiegel zur Reflexion eines Laserstrahlanteils in die Kapillare 2 zurück notwendig.

Die Hülle des Vorratstanks 4 besteht aus einem Metallzylinder 8 und zwei metallischen Stirnringen 9, die an den Ecken 10 miteinander verbunden, insbesondere verschweißt sind. An dem einen Stirnring 9 ist die als Zylinder ausgebildete Kathode 11 befestigt, die über den Anschluß 11a mit der Stromversorgung verbunden wird.

Um das aus Keramik bestehende Kapillarrohr mit der Hülle 8, 9 des koaxialen Vorratstanks 4 dicht zu verbinden, sind Bereiche 12 und 13 der Kapillarrohroberfläche metallisiert. Außerdem sind die Stirnringe 9 an ihren Innenrand mit metallischen Federringen 14 verbunden, insbesondere mit ihnen verschweißt, die die geringe axiale Beweglichkeit bei guter radialer Steifigkeit erlauben. Diese Federringe werden innen an den metallisierten Flächen 12/13 des Kapillarrohrs angelötet. Durch diesen Verbindungsvorgang kommt keine Überhitzung des Kapillarrohrs und damit Beeinflussung der Kapillare zustande.

In Figur 2, in der ein Laserrohr vereinfacht dargestellt ist, sind der Figur 1 entsprechende Teil mit « ' » versehen. Hier ist nur der Vorratstank 4' und seine Befestigung am Kapillarrohr 1' unterschiedlich ausgebildet und zwar sind hier die Stirnringe direkt an den Metallisierungsbereichen 12', 13' des Kapillarrohrs angelötet. Die Axialbeweglichkeit bei radialer Steifigkeit wird hier durch die Auswölbung 15 im Zylinder 8' erzielt. Diese Auswölbung kann auch nach innen gerichtet sein.

Ist nach der Verbindung der Tankhülle 8, 9 bzw. 8', 9' mit dem Kapillarrohr 1 bzw. 1' die Parallelität zwischen der Oberfläche des Zylinders 8 bzw. 8' mit der Kapillarachse nicht exakt gegeben, so kann dann noch die Oberfläche im Sinne dieser Parallelität bearbeitet werden. Damit ist bei exakter Fassung des Laserrohrs der Figuren 1 bzw. 2 an der Oberfläche des Zylinders 8 des Vorratstanks 4 die exakte Ausrichtung der Kapillarachse ohne Justierung garantiert.

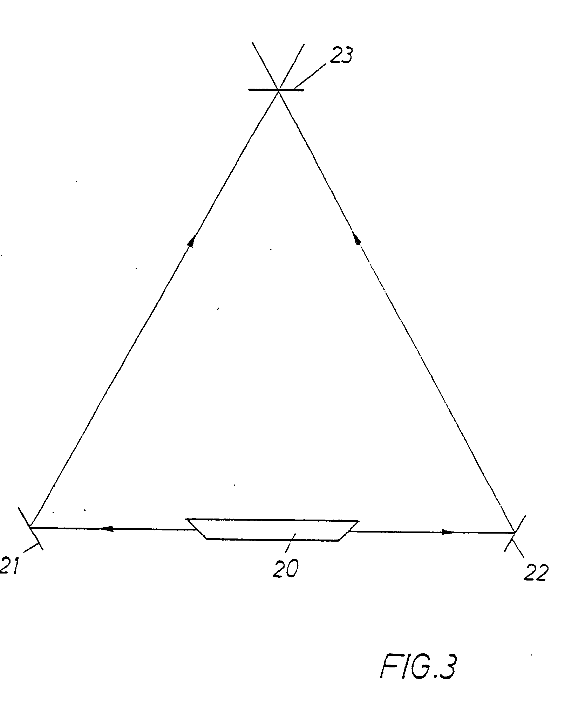

Vorzugsweise wird das erfindungsgemäße Laserrohr gemäß Figur 1 und 2 in einem sogenannten aktiven Laserkreisel angewandt, bei dem bekanntlich zwei Laserstrahlen auf gleichen Wegen entgegengesetzt umlaufen. Das Prinzip hiervon zeigt Figur 3, in der das Laserrohr mit 20 und drei Spiegel mit 21 bis 23 bezeichnet sind. Das aus dem Laserrohr 20 an beiden Endflächen austretende Licht wird von den Spiegeln 21 und 22 weitgehend reflektiert und trifft dann auf den Spiegel 23, der teildurchlässig ist. Der reflektierte Teil wird durch die Spiegel 21 bzw. 22 in das Laserrohr 20 rückreflektiert. Hierdurch kommt es zur für den Laserbetrieb notwendigen Rückkopplung. Die durch den Spiegel 23 durchtretenden Anteile werden durch eine nicht gezeigte optische Anordnung einander überlagert und es wird die bei Drehung hervorgerufene Frequenzverschiebung zwischen beiden Lichtwellen zwecks Ermittlung der Drehgeschwindigkeit gemessen.

## Patentansprüche

1. Gaslaser, bestehend

a) aus einem Kapillarrohr (1, 1') aus nichtleitendem Material wie Glas, Keramik oder dergleichen,

b) aus einem Vorratstank (4, 4'), der mit der Kapillare (2) in Strömungsverbindung steht und wie diese mit einem aktiven Lasergas gefüllt ist, der das Kapillarrohr koaxial umgibt, dessen Hülle (8, 9 ; 8', 9') an dem Kapillarrohr den Vorratstank abdichtend in zwei axial versetzten Ebenen befestigt ist und in dem die Kathode (11, 11') untergebracht ist,

c) aus zwei an der Kapillare angebrachten Anoden (5, 5') und

d) aus an den Kapillarenden angeordneten Spiegeln

e) wobei das Kapillarrohr (1, 1') symmetrisch hinsichtlich einer in axialer Richtung in der Mitte der Kapillare (2) und senkrecht dazu gedachten Ebene ausgebildet ist,

f) und die Strömungsverbindung (3) zwischen Kapillare (2) und Vorratstank (4, 4') in dieser Ebene liegt, dadurch gekennzeichnet, daß
— das Kapillarrohr (1, 1') einstückig ausgebildet ist und die Strömungsverbindung (3) aus einer vorzugsweise die Kapillare (2) durchsetzenden Öffnung besteht,
— das Verbindungsteil (14) zwischen der Hülle (8, 9 ; 8', 9') des Vorratstanks (4, 4') und dem Kapillarrohr (1, 1') oder Teile (15) der Hülle (8, 9 ; 8', 9') selbst derart verformbar sind, daß bei vorhandener radialer Steifheit eine geringe axiale Beweglichkeit zwischen Kapillarrohr (1, 1') und Vorratstank (4, 4') gegeben ist,
— daß von den Spiegeln wenigstens einer teildurchlässig ist, oder daß unter dem Brewster-Winkel angeordnete, durchsichtige Platten (7, 7') die Kapillare (2) abschließen und die Spiegel (21-23) extern angebracht sind, und daß die beiden Anoden (5, 5') unmittelbar an den Enden des Kapillarrohrs (1, 1') angeordnet sind.

2. Gaslaser nach Anspruch 1, dadurch gekennzeichnet, daß die Anoden (5, 5') auf den Stirnflächen des Kapillarrohrs (1, 1') integriert sind.

3. Gaslaser nach Anspruch 2, dadurch gekennzeichnet, daß auf den die Anoden (5, 5') bildenden Teilen die durchsichtigen Platten (7, 7') oder Laserspiegel aufgebracht sind.

4. Gaslaser nach einem der Ansprüche 1 bis 3, dadurch gekennzeichnet, daß die Hülle (8, 9 ; 8', 9') des Vorratstanks (4, 4') aus mechanisch gut bearbeitbarem Material, z. B. Metall, besteht.

5. Gaslaser nach einem der Ansprüche 1 bis 4, dadurch gekennzeichnet, daß die Oberfläche des Kapillarrohrs (1) im Bereich (12, 13) der Verbindung mit der Hülle (8, 9) des Vorratstanks (4) metallisiert ist und daß ein metallischer, verformbarer Ring (14) durch Lötung mit dem metallisierten Bereich (12 ; 13) des Kapillarrohrs (1) verbunden ist.

6. Gaslaser nach Anspruch 5, dadurch gekennzeichnet, daß der metallische, verformbare Ring (14) mit der Hülle (8, 9) durch Ver- oder Einschmelzen verbunden ist.

7. Gaslaser nach Anspruch 4, dadurch gekennzeichnet, daß die Oberfläche des Kapillarrohrs (1') im Bereich (12', 13') der Verbindung mit der Hülle (8', 9') des Vorratstanks (4') metallisiert ist und daß die Hülle (8', 9') durch Lötung mit dem metallisierten Bereich (12', 13') des Kapillarrohrs (1') verbunden ist.

8. Gaslaser nach einem der Ansprüche 4 bis 7, dadurch gekennzeichnet, daß nach Befestigung des Vorratstanks (4, 4') an dem Kapillarrohr (1 ; 1') die Tankoberfläche (8) im Sinne einer Koaxialität der Kapillarachse mit wenigstens einem Teil (8, 8') der Tankoberfläche mechanisch bearbeitet ist.

9. Gaslaser nach einem der Ansprüche 1 bis 8, dadurch gekennzeichnet, daß die Hülle des Vorratsbehälters (4) aus einem Metallzylinder (8) und zwei damit verbundenen, metallischen Stirnringen (9) besteht, daß an dem einen Stirnring (9) die als Zylinder ausgebildete Kathode (11) befestigt ist und daß die Innenkante der Stirnringe (9) mit dem Kapillarrohr (1) über die verformbaren Teile (14) verbunden sind.

10. Gaslaser nach einem der Ansprüche 1 bis 9 mit externen Spiegeln, gekennzeichnet, durch seine Anwendung als Teil eines aktiven Laser-Drehgeschwindigkeitsmessers (Figur 3).

## Claims

1. A gas laser consisting
a) of a capillary tube (1, 1') of non-conducting material such as glass, ceramic or the like,
b) of a storage tank (4, 4') which is in flow communication with the capillary (2) and, like this, is filled with an active laser gas and which surrounds the capillary tube coaxially and the casing (8, 9 ; 8', 9') of which is secured to the capillary tube, sealing off the storage tank in two axially offset planes, and in which the cathode (11, 11') is accommodated,
c) of two anodes (5, 5') arranged on the capillary and
d) of mirrors disposed at the ends of the capillary,
e) the capillary tube (1, 1') being made symmetrical with respect to an imaginary plane in the middle of the capillary (2) in the axial direction, and perpendicular thereto,
f) and the flow communication (3) between capillary (2) and storage tank (4, 4') lying in this plane, characterised in that
— the capillary tube (1, 1') is made in one piece and the flow communication (3) consists of an aperture preferably passing through the capillary (2),
— the connecting member (14) between the casing (8, 9 ; 8', 9') of the storage tank (4, 4') and the capillary tube (1, 1') or parts (15) of the casing (8, 9 ; 8', 9') itself are deformable in such a manner that, with radial rigidity present, a slight axial mobility is afforded between capillary tube (1, 1') and storage tank (4, 4'),
— that at least one of the mirrors is partially transparent, or that transparent plates (7, 7') disposed at Brewster's angle terminate the capillary (2) and the mirrors (21-23) are mounted externally, and that the two anodes (5, 5') are disposed directly at the ends of the capillary tube (1, 1').

2. A gas laser as claimed in claim 1, characterised in that the anodes (5, 5') are integrated on the end faces of the capillary tube (1, 1').

3. A gas laser as claimed in claim 2, characterised in that the transparent plates (7, 7') or laser mirrors are mounted on the parts forming the anodes (5, 5').

4. A gas laser as claimed in any one of claims 1 to 3, characterised in that the casing (8, 9 ; 8', 9') of the storage tank (4, 4') consists of a material which can be worked well mechanically, for example metal.

5. A gas laser as claimed in any one of claims 1 to 4, characterised in that the surface of the capillary tube (1) is metallised in the region (12, 13) of the connection to the casing (8, 9) of the storage tank (4) and that a metallic, deformable ring (14) is connected to the metallised region (12 ; 13) of the capillary tube (1) by soldering.

6. A gas laser as claimed in claim 5, characterised in that the metallic, deformable ring (14) is connected to the casing (8, 9) by fusion of sealing in.

7. A gas laser as claimed in claim 4, characterised in that the surface of the capillary tube (1') is metallised in the region (12', 13') of the connection to the casing (8', 9') of the storage tank (4') and that the casing (8', 9') is connected to the metallised region (12', 13') of the capillary tube (1') by soldering.

8. A gas laser as claimed in any one of claims 4 to 7, characterised in that, after the storage tank (4, 4') has been secured to the capillary tube (1 ; 1'), the surface (8) of the tank is mechanically treated to achieve coaxiality between the axis of the capillary and at least one part (8, 8') of the surface of the tank.

9. A gas laser as claimed in any one of claims 1 to 8, characterised in that the casing of the storage container (4) consists of a metal cylinder (8) and two metallic end rings (9) connected thereto, that the cathode (11), constructed in the form of a cylinder, is secured to one end ring (9) and that the inner edges of the end rings (9) are connected to the capillary tube (1) via the deformable parts (14).

10. A gas laser as claimed in any one of claims 1 to 9 having external mirrors, characterised by its use as part of an active laser rotary speed indicator (Figure 3).

**Revendications**

1. Laser à gaz se composant
   a) d'un tube capillaire (1, 1') en matériau non conducteur comme du verre, de la céramique ou analogue,
   b) d'un réservoir de stockage (4, 4'), qui est en liaison fluidique avec le capillaire (2) et qui est rempli comme celui-ci d'un gaz laser actif, qui entoure l'enveloppe (8, 9 ; 8', 9') du tube capillaire coaxialement en étant fixé de façon étanche sur celle-ci dans deux plans décalés axialement et dans lequel est disposée la cathode (11, 11'),
   c) de deux anodes (5, 5') disposées sur le capillaire, et
   d) de miroirs placés aux extrémités du capillaire,
   e) le tube capillaire (1, 1') étant profilé symétriquement par rapport à un plan orienté dans une direction axiale au milieu du capillaire (2) et perpendiculairement à celui-ci,
   f) et la liaison fluidique (3) entre le capillaire (2) et le réservoir de stockage (4, 4') étant placée dans ce plan, caractérisé en ce que :
   — le tube capillaire (1, 1') est réalisé d'une seule pièce et la liaison fluidique (3) se compose d'une ouverture traversant avantageusement le capillaire (2),
   — la partie de liaison (14) entre l'enveloppe (8, 9 ; 8', 9') du réservoir de stockage (4, 4') et le tube capillaire (1, 1') ou des parties (15) de l'enveloppe (8, 9 ; 8', 9') proprement dites sont déformables de telle sorte que, dans le cas de l'existence d'une rigidité radiale, une petite mobilité axiale soit établie entre le tube capillaire (1, 1') et le réservoir de stockage (4, 4'),
   — en ce qu'au moins un des miroirs est partiellement transparent, ou bien en ce que des plaques transparentes (7, 7') disposées suivant l'angle de Brewster obturent le capillaire (2) et les miroirs (21-23) sont disposés extérieurement, et en ce que les deux anodes (5, 5') sont disposées directement sur les extrémités du tube capillaire (1, 1').

2. Laser à gaz selon la revendication 1, caractérisé en ce que les anodes (5, 5') sont intégrées dans les surfaces frontales du tube capillaire (1, 1').

3. Laser à gaz selon la revendication 2, caractérisé en ce que les plaques transparentes (7, 7') ou les miroirs du laser sont disposés sur les parties formant les anodes (5, 5').

4. Laser à gaz selon une des revendications 1 à 3, caractérisé en ce que l'enveloppe (8, 9 ; 8', 9') du réservoir de stockage (4, 4') est constituée d'un matériau pouvant être mécaniquement bien usiné, par exemple un métal.

5. Laser à gaz selon une des revendications 1 à 4, caractérisé en ce que la surface du tube capillaire (1) est métallisée dans la zone (12, 13) de jonction avec l'enveloppe (8, 9) du réservoir de stockage et en ce qu'un anneau métallique déformable (14) est relié par brasage avec la zone métallisée (12, 13) du tube capillaire (1).

6. Laser à gaz selon la revendication 5, caractérisé en ce que l'anneau métallique déformable (14) est lié à l'enveloppe (8, 9) par scellement ou par fusion.

7. Laser à gaz selon la revendication 4, caractérisé en ce que la surface du tube capillaire (1') est métallisée dans la zone (12', 13') de jonction avec l'enveloppe (8', 9') du réservoir de stockage (4') et en ce que cette enveloppe (8', 9') est reliée par brasage avec la zone métallisée (12', 13') du tube capillaire (1').

8. Laser à gaz selon une des revendications 4 à 7, caractérisé en ce que, après fixation du réservoir de stockage (4, 4') sur le tube capillaire (1 ; 1'), la surface du réservoir (8) est usinée mécaniquement dans le sens d'une disposition coaxiale de l'axe du capillaire avec au moins une partie (8, 8') de la surface de réservoir.

9. Laser à gaz selon une des revendications 1 à 8, caractérisé en ce que l'enveloppe du réservoir de stockage (4) se compose d'un cylindre métallique (8) et de deux anneaux frontaux métalliques (9) reliés à celui-ci, en ce que la cathode (11) agencée en forme de cylindre est fixée sur un des anneaux frontaux (9) et en ce que les bords intérieurs des anneaux frontaux (9) sont reliés au tube capillaire (1) par l'intermédiaire des parties déformables (14).

10. Laser à gaz selon une des revendications 1 à 9, comportant des miroirs externes, caractérisé par son utilisation comme une partie d'un appareil de mesure de vitesse de rotation à laser actif (Figure 3).

FIG.1

FIG.2

1

FIG.3